# FASCICULE DE BREVET EUROPEEN

(11) **EP 3 112 659 B1**
(45) Date de publication et mention de la délivrance du brevet: **04.11.2020**
(21) Numéro de dépôt: 16176011.1
(22) Date de dépôt: 23.06.2016
(51) Int. Cl.: F02M 53/00, F01P 3/20, F01P 9/04, F02M 31/14

(54) **MOTEUR COMPORTANT UN SYSTÈME DE REFROIDISSEMENT DU LIQUIDE DE REFROIDISSEMENT PAR DU CARBURANT**
MOTOR, DER EIN KÜHLSYSTEM DER KÜHLFLÜSSIGKEIT DURCH EINEN KRAFTSTOFF UMFASST
ENGINE COMPRISING A SYSTEM FOR COOLING THE COOLANT USING FUEL

(30) Priorité: 29.06.2015 FR 1556024
(43) Date de publication de la demande: 04.01.2017
(73) Titulaire: Renault S.A.S., 92100 Boulogne-Billancourt (FR)
(72) Inventeur: LAVOISIER, Frederic, 75012 PARIS (FR); GOURARA, Amine, 91180 ST GERMAIN LES ARPAJON (FR)

(56) Documents cités:
- WO-A1-97/33078
- FR-A1- 2 521 219
- US-A- 2 940 435
- US-A- 3 989 019
- US-A- 4 553 697
- US-A- 5 443 053

## Description

La présente invention concerne un moteur comportant un système de refroidissement du liquide de refroidissement par du carburant.

La présente invention concerne plus particulièrement un véhicule comportant un compartiment moteur délimitant une entrée d'air destiné au refroidissement d'un moteur à combustion interne, notamment du type Diesel à injection directe, comportant au moins :
- un circuit d'alimentation pour alimenter le moteur en carburant, ledit circuit d'alimentation comportant au moins un réservoir de carburant auquel est associée une pompe de gavage, des moyens de filtration du carburant, une pompe haute pression et un capteur de mesure de la température du carburant ;
- un circuit de refroidissement du moteur par circulation d'au moins un liquide de refroidissement, ledit circuit de refroidissement comportant au moins une pompe et un capteur de mesure de la température du liquide de refroidissement,
le véhicule comportant des moyens d'obturation de l'entrée d'air améliorant le rendement énergétique du véhicule, lesdits moyens d'obturation étant contrôlés selon une stratégie de réduction de la traînée aérodynamique du moteur.

Un moteur à combustion interne de ce type équipe notamment, mais non exclusivement, un véhicule automobile.

On connait de US5,443,053-A un dispositif de chauffage du carburant pour limiter l'augmentation de la pollution durant la phase de montée en température du moteur.

Dans un véhicule automobile, on cherche à refroidir toujours plus efficacement le moteur dans le but notamment d'en optimiser le fonctionnement et d'en préserver la fiabilité.

Le refroidissement du moteur est d'autant plus important que de nombreux moteurs à combustion interne sont aujourd'hui équipés d'un ou plusieurs dispositifs de dépollution qui, destinés à limiter les émissions polluantes, nécessitent des phases de purge ou de régénération entraînant généralement une élévation de température dans le compartiment moteur.

De tels dispositifs de dépollution sont par exemple constitués par un piège à oxydes d'azote ou « NOx », en particulier sur les moteurs Diesel qui en émettent davantage que ceux à essence.

Les pièges à NOx utilisent des métaux précieux (tels que le platine, le baryum, le rhodium etc.) pour piéger chimiquement les oxydes d'azote présents dans les gaz d'échappement puis régulièrement les convertir en gaz neutres comme de l'azote (N₂) et de l'oxygène (O₂).

Les filtres à particules, souvent désignés par leur acronyme « FAP », constituent un autre exemple de dispositif de dépollution qui nécessite une régénération.

Tout en recherchant à refroidir efficacement le moteur, notamment par l'air extérieur pénétrant dans le compartiment moteur du véhicule et par un circuit de refroidissement associé, on cherche parallèlement à réduire la traînée aérodynamique du moteur.

Une stratégie de réduction de la traînée aérodynamique du moteur est ainsi parfois mise en œuvre sur certains véhicules.

A titre d'exemple non limitatif, le véhicule comporte des moyens d'obturation comme un volet aérodynamique mobile qui est placé dans au moins une entrée d'air du flux de refroidissement, c'est à dire l'entrée par laquelle l'air extérieur (ou air frais) pénètre à l'intérieur du compartiment moteur lorsque le véhicule se déplace.

L'utilisation d'un volet d'obturation améliore le rendement énergétique en fermant totalement ou partiellement l'entrée d'air frontale et/ou latérale associée lorsque le refroidissement du moteur ne nécessite pas ou peu d'air frais.

En position fermée, le volet améliore les performances aérodynamiques en redirigeant le flux d'air, notamment en le déviant autour de l'avant du véhicule pour le faire s'écouler sur les côtés de celui-ci plutôt que par le compartiment moteur où il rencontre une forte résistance aérodynamique.

Une stratégie de réduction de la traînée aérodynamique du moteur consiste par exemple à contrôler automatiquement l'ouverture ou la fermeture d'un tel volet, généralement en fonction de la vitesse du véhicule et/ou de la température du liquide de refroidissement moteur.

En conséquence, on recherche un compromis entre, d'une part, la réduction de la traînée aérodynamique du moteur et, d'autre part, l'efficacité du refroidissement du moteur.

L'élévation de la température dans le compartiment moteur résultant de la mise en œuvre de phase(s) de purge et/ou de régénération de dispositifs de dépollution conduit à devoir privilégier le refroidissement du moteur et cela au détriment de la traînée aérodynamique du moteur qui augmente, augmentation de la traînée aérodynamique qui provoque celle de la consommation de carburant.

La désactivation de la stratégie de réduction de la traînée aérodynamique est généralement effective dès que débute une telle phase de purge ou de régénération d'un dispositif de dépollution (encore appelé parfois de post-traitement), induisant alors une surconsommation de carburant.

En effet, l'élévation de la température du liquide de refroidissement survenant lors d'une telle phase de purge ou de régénération déclenche la désactivation (ou l'arrêt) de la stratégie de réduction de la traînée aérodynamique induite par le moteur.

Le but de la présente invention est notamment d'augmenter la durée pendant laquelle on maintient le compromis entre la stratégie de réduction de la traînée aérodynamique induite par le moteur et le refroidissement par air dudit moteur, c'est à dire de retarder d'une durée déterminée la désactivation de la stratégie de réduction de la traînée aérodynamique du moteur.

Dans ce but, l'invention propose un véhicule comportant un compartiment moteur délimitant une entrée d'air destiné au refroidissement d'un moteur à combustion interne du type décrit précédemment, caractérisé en ce que le moteur comporte un système de refroidissement pour refroidir sélectivement à travers au moins un échangeur thermique du liquide de refroidissement au moyen du carburant et en ce que le système de refroidissement du moteur est utilisé pour refroidir sélectivement à travers au moins un échangeur thermique le liquide de refroidissement au moyen du carburant et retarder la désactivation de la stratégie de réduction de la traînée aérodynamique du moteur en redirigeant le flux d'air, notamment en le déviant autour de l'avant du véhicule pour le faire s'écouler sur les côtés de celui-ci plutôt que par le compartiment moteur où il rencontre une forte résistance aérodynamique.

Grâce à l'invention, la désactivation d'au moins une stratégie de réduction de la traînée aérodynamique du moteur est avantageusement retardée.

Avantageusement, le refroidissement supplémentaire du liquide de refroidissement réalisé avec du carburant permet de retarder la désactivation de ladite stratégie de réduction de la traînée aérodynamique du moteur, tout en maintenant un refroidissement efficace du moteur.

En maintenant l'activation de la stratégie de réduction de la traînée aérodynamique du moteur, on en prolonge pendant une durée déterminée correspondante les avantages et tout particulièrement le bénéfice de réduction de la consommation de carburant.

Selon d'autres caractéristiques de l'invention :
- ledit système de refroidissement pour refroidir du liquide de refroidissement au moyen du carburant comporte au moins une première boucle de circulation du carburant qui est reliée au circuit d'alimentation en carburant du moteur et une deuxième boucle de circulation du liquide de refroidissement qui est reliée au circuit de refroidissement du moteur, lesdites première boucle et deuxième boucle étant sélectivement mises en relation de transfert thermique au travers dudit au moins un échangeur thermique du système par des moyens de régulation ;
- lesdits moyens de régulation du système de refroidissement comportent au moins des premiers moyens de régulation pour contrôler la circulation du carburant dans ladite première boucle et des deuxièmes moyens de régulation pour contrôler la circulation du liquide de refroidissement dans ladite deuxième boucle du système ;
- les premiers moyens de régulation comportent au moins une vanne qui est agencée en aval du réservoir de carburant ;
- ladite au moins une vanne formant les premiers moyens de régulation est agencée en aval d'une pompe de gavage et en amont de moyens de filtration du carburant que comporte ledit circuit d'alimentation en carburant du moteur ;
- les deuxièmes moyens de régulation comportent au moins une vanne qui est agencée en amont de l'échangeur thermique du système ;
- les vannes constituant lesdits premier et deuxième moyens de régulation du système sont respectivement constituées par une vanne non proportionnelle, dites de type « on / off » ;
- le système de refroidissement comporte au moins une pompe agencée dans la deuxième boucle de circulation du liquide de refroidissement ;
- le système de refroidissement comporte au moins des moyens de mesure de la température du carburant et des moyens de mesure de la température du liquide de refroidissement ;
- lesdits moyens de mesure de température du carburant sont constitués par le capteur de température qui est agencé en amont de la pompe haute pression du circuit d'alimentation en carburant du moteur et en ce que lesdits moyens de mesure de température du liquide de refroidissement sont constitués par le capteur de température qui est agencé en aval du moteur pour mesurer la température du liquide de refroidissement en sortie dudit moteur ;
- l'échangeur thermique du système de refroidissement est agencé au plus près du réservoir de carburant.

D'autres caractéristiques et avantages de l'invention apparaîtront à la lecture de la description qui va suivre pour la compréhension de laquelle on se reportera aux dessins annexés dans lesquels :

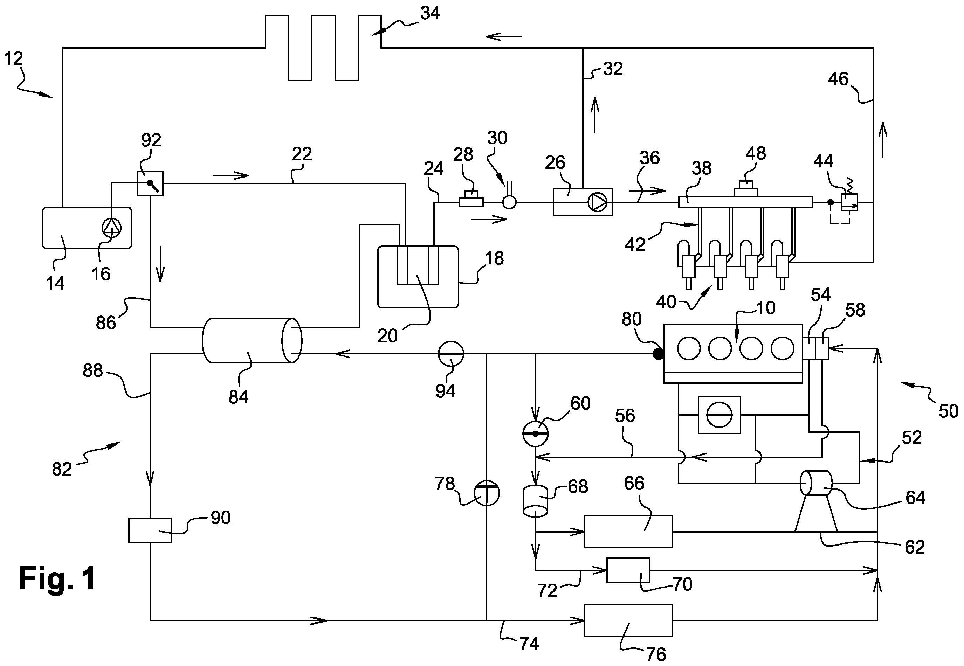

- la figure 1 est une représentation schématique d'un exemple de moteur à combustion interne comportant un système de refroidissement pour refroidir par transfert thermique du liquide de refroidissement au moyen du carburant et qui illustre un mode de réalisation d'un tel système de refroidissement selon l'invention ;

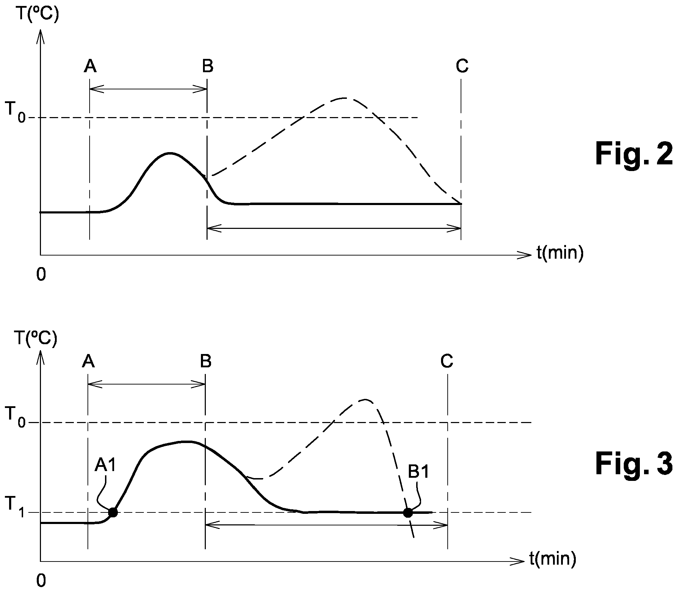

- les figures 2 et 3 sont des représentations graphiques qui représentent, en degrés Celsius (°C) sur l'axe des ordonnées, la température du liquide de refroidissement du moteur en fonction du temps, en minutes (min) sur l'axe des abscisses, et qui illustrent les principales phases de fonctionnement d'un moteur selon l'état de la technique pour la figure 2 et, pour la figure 3, d'un moteur équipé du système de refroidissement selon le mode de réalisation de la figure 1.

On a représenté schématiquement à la figure 1, un exemple d'un moteur 10 à combustion interne, notamment pour un véhicule automobile.

De préférence, le moteur 10 à combustion interne est un moteur du type Diesel à injection directe.

Dans l'exemple, le moteur 10 à combustion interne est un moteur comportant quatre cylindres qui, non référencés, sont représentés schématiquement par des cercles juxtaposés.

Le moteur 10 à combustion interne comporte au moins un circuit 12 d'alimentation pour alimenter le moteur 10 en carburant.

Le circuit 12 d'alimentation en carburant du moteur 10 comporte au moins un réservoir 14 de carburant auquel est avantageusement associée une pompe 16 de gavage.

De préférence, la pompe 16 de gavage est une pompe électrique. Le circuit 12 d'alimentation comporte des moyens 18 de filtration du carburant formés par au moins un filtre.

De préférence, le circuit 12 d'alimentation comporte des moyens de chauffage 20 du carburant qui sont associés aux moyens 18 de filtration.

Le circuit 12 d'alimentation comporte un premier tronçon 22 de conduite qui relie la sortie de la pompe 16 de gavage à l'entrée des moyens 18 de filtration et un deuxième tronçon 24 de conduite qui relie la sortie des moyens 18 de filtration à une pompe 26 du type haute pression.

De préférence, le circuit 12 d'alimentation comporte au moins un capteur 28 de pression, dit capteur basse pression, qui est agencé dans le deuxième tronçon 24 de conduite du circuit 12 d'al imentation.

Avantageusement, le circuit 12 d'alimentation comporte au moins un capteur 30 de mesure de la température du carburant.

De préférence, le capteur 30 de mesure de la température du carburant est agencé dans le deuxième tronçon 24 de conduite du circuit 12 d'alimentation, en amont de la pompe 26 haute pression.

Le circuit 12 d'alimentation comporte un troisième tronçon 32 de conduite qui relie la pompe 26 au réservoir 14, de préférence des moyens 34 de refroidissement du carburant sont agencés dans ledit troisième tronçon 32 de conduite.

Le circuit 12 d'alimentation comporte un quatrième tronçon 36 de conduite qui relie la sortie de la pompe 26 à une rampe 38 d'injection du carburant.

La rampe 38 d'injection du carburant est une rampe commune qui alimente en carburant sous haute pression chacun des injecteurs 40 de carburant par un tuyau 42, un injecteur 40 étant associé à un cylindre du moteur 10.

Un limiteur de pression 44 est agencé en sortie de la rampe 38 commune d'injection du carburant, sortie qui est reliée par un cinquième tronçon 46 de conduite au troisième tronçon 32 de conduite relié au réservoir 14.

De préférence, la rampe 38 d'injection comporte un capteur 48 de pression pour mesurer la pression du carburant.

On se reportera avantageusement à la figure 1 sur laquelle le sens de circulation du carburant dans le circuit 12 d'alimentation est indiqué par des flèches.

Le moteur 10 à combustion interne comporte au moins un circuit 50 de refroidissement du moteur par la mise en circulation d'un liquide de refroidissement.

Le moteur 10 comporte un circuit 52 d'huile comportant notamment une pompe 54 à huile pour la mise en circulation de l'huile dans le circuit 52 et à travers le moteur 10.

Le circuit 50 de refroidissement comporte une première branche 56 qui relie une pompe 58, dite généralement « pompe à eau », pour la mise en circulation du liquide de refroidissement dans le circuit 50.

Le liquide de refroidissement est principalement constitué par de l'eau formant la base du fluide caloporteur et à laquelle sont ajoutés des additifs présentant par exemple des propriétés antigel et/ou anticorrosive.

De préférence, la pompe 58 est agencée en entrée du moteur 10 à combustion interne, c'est à dire en amont, le liquide de refroidissement circulant par convention à travers le moteur 10 et dans le circuit 50 de refroidissement de l'amont vers l'aval.

La première branche 56 du circuit 50 de refroidissement reboucle sur le moteur 10 et comporte des moyens 60 de régulation, tels qu'une vanne, pour contrôler la circulation du liquide de refroidissement en fonction du besoin du moteur 10 qui diffère selon que l'on se trouve en phase froide (ou « *warm up* ») ou en phase chaude.

La gestion thermique obtenue avec le circuit 50 de refroidissement doit, en phase froide, permettre une montée en température rapide du moteur 10 jusqu'à une plage déterminée de températures correspondant à un fonctionnement optimal du moteur tandis que, en phase chaude, le moteur 10 est refroidi pour être maintenu dans cette plage de températures.

Le circuit 50 de refroidissement comporte une deuxième branche 62 qui est reliée en sortie à la pompe 58 et qui est reliée en entrée à la première branche 56 comportant la vanne 60.

La deuxième branche 62 comporte au moins un échangeur thermique 64 de type eau-huile mettant en relation de transfert thermique l'huile du circuit 52 avec le liquide de refroidissement du circuit 50.

La deuxième branche 62 comporte un radiateur 66 pour le chauffage de l'habitacle, encore appelé parfois « aérotherme ».

Dans l'exemple et selon le sens de circulation du liquide de refroidissement, le radiateur 66 de chauffage est agencé en amont de l'échangeur thermique 64 eau-huile et en aval de moyens 68 de refroidissement de gaz d'échappement.

Les moyens 68 de refroidissement sont utilisés pour refroidir une partie des gaz d'échappement destinée à être réintroduite dans les cylindres du moteur 10 selon le principe de recirculation des gaz d'échappement, communément désigné par l'acronyme « EGR » pour « *Exhaust Gaz Recirculation* » en anglais.

De préférence, le circuit 50 de refroidissement comporte un vase d'expansion 70 (ou bocal de dégazage) qui est agencé dans une branche 72 s'étendant en parallèle de la deuxième branche 62 comportant le radiateur 66 de chauffage.

Le circuit 50 de refroidissement comporte une troisième branche 74 pour le refroidissement du liquide de refroidissement, ladite troisième branche 74 comportant un radiateur 76 en amont duquel est agencé un thermostat 78.

L'ouverture du thermostat 78 est de préférence commandée par la température du liquide de refroidissement.

Lorsque la température du liquide de refroidissement dans le circuit 50 est supérieure à une température de seuil déterminée du thermostat 78, le thermostat 78 est ouvert pour établir une circulation du liquide de refroidissement dans la troisième branche 74 et en permettre le refroidissement au travers du radiateur 76.

Le circuit 50 de refroidissement comporte des moyens de mesure de la température du liquide de refroidissement.

Avantageusement, le circuit 50 de refroidissement comporte au moins un capteur 80 de mesure de la température du liquide de refroidissement qui est de préférence agencé en sortie du moteur 10 à combustion interne.

Dans l'exemple de réalisation représenté sur la figure 1, le circuit 50 de refroidissement comporte au moins une première branche 56, dite de contournement du bloc moteur, une deuxième branche 62, dite aérotherme, pour le chauffage de l'habitacle du véhicule équipé du moteur 10 et une troisième branche 74 de refroidissement du liquide de refroidissement.

Le circuit 50 de refroidissement comporte principalement au moins une pompe 58 pour le liquide de refroidissement, un échangeur 64 thermique de type eau-huile, un vase 70 d'expansion, un radiateur 76 de refroidissement du liquide de refroidissement et un capteur 80 de mesure de la température du liquide de refroidissement.

Conformément à l'invention, le moteur 10 à combustion interne comporte un système 82 de refroidissement pour refroidir sélectivement à travers au moins un échangeur 84 thermique du liquide de refroidissement au moyen du carburant.

Le système 82 de refroidissement constitue un circuit supplémentaire destiné à refroidir tout ou partie du liquide de refroidissement au moyen du carburant contenu dans le réservoir 14, le transfert thermique s'opérant du liquide de refroidissement vers le carburant.

Avantageusement, le système 82 de refroidissement permet de retarder la désactivation d'au moins une stratégie de réduction de la traînée aérodynamique du moteur.

En effet, le refroidissement supplémentaire du liquide de refroidissement obtenu grâce au carburant permet de retarder le changement d'état de ladite au moins une stratégie de réduction de la traînée aérodynamique induite par le moteur 10.

La stratégie passe de l'état actif (activation) à l'état inactif (désactivation) lorsque la température du liquide de refroidissement devient supérieure à une température de seuil, provoquant la désactivation de ladite stratégie de réduction de la traînée aérodynamique du moteur.

Tel qu'expliqué en préambule, une stratégie possible de réduction de la traînée aérodynamique induite par le moteur 10 consiste par exemple à contrôler l'ouverture et la fermeture d'au moins un volet pour introduire sélectivement depuis l'extérieur de l'air frais à l'intérieur du compartiment moteur afin d'en permettre le refroidissement.

Pour refroidir du liquide de refroidissement au moyen du carburant, le système 82 de refroidissement comporte au moins une première boucle 86 de circulation du carburant et une deuxième boucle 88 de circulation du liquide de refroidissement, lesdites première boucle 86 et deuxième boucle 88 étant sélectivement mises en relation de transfert thermique au travers dudit au moins un échangeur 84 thermique du système.

La première boucle 86 de circulation du carburant est reliée au circuit 12 d'alimentation en carburant du moteur.

La deuxième boucle 88 de circulation du liquide de refroidissement est reliée au circuit 50 de refroidissement du moteur.

Le système 82 de refroidissement comporte au moins une pompe 90 qui est agencée dans la deuxième boucle 88 de circulation du liquide de refroidissement.

Le système 82 de refroidissement comporte des moyens de régulation pour contrôler respectivement la circulation du carburant dans la première boucle 86 de circulation et la circulation du liquide de refroidissement dans la deuxième boucle 88 de circulation.

Le système 82 de refroidissement comporte au moins des premiers moyens 92 de régulation pour contrôler la circulation du carburant dans ladite première boucle 86 et des deuxièmes moyens 94 de régulation pour contrôler la circulation du liquide de refroidissement dans ladite deuxième boucle 88 du système.

De préférence, les premiers moyens 92 de régulation comportent au moins une vanne qui est agencée en aval du réservoir 14 de carburant.

Ladite au moins une vanne 92 formant les premiers moyens de régulation est agencée en aval de la pompe 16 de gavage et en amont de moyens 18 de filtration du carburant que comporte ledit circuit 12 d'alimentation en carburant du moteur 10.

De préférence, les deuxièmes moyens 94 de régulation comportent au moins une vanne qui est agencée en amont de l'échangeur 84 thermique du système 82 de refroidissement.

Dans le mode de réalisation représenté sur la figure 1, les vannes 92 et 94 constituant lesdits premier et deuxième moyens de régulation du système 82 de refroidissement sont respectivement constituées par une vanne non proportionnelle, soit une vanne de type « on / off ».

Le système 82 de refroidissement comporte au moins des moyens de mesure de la température du carburant.

Le système 82 de refroidissement comporte au moins des moyens de mesure de la température du liquide de refroidissement.

Avantageusement, le système 82 de refroidissement utilise des moyens de mesure de température existant dans le circuit 12 d'alimentation d'une part, et dans le circuit 50 de refroidissement, d'autre part.

Les moyens de mesure de température du carburant comportent au moins un capteur qui est avantageusement formé par le capteur 30 de température agencé en amont de la pompe 26 haute pression du circuit 12 d'alimentation en carburant du moteur 10.

Les moyens de mesure de température du liquide de refroidissement comportent au moins un capteur qui est avantageusement formé par le capteur 80 de température agencé en aval du moteur 10 pour mesurer la température du liquide de refroidissement en sortie dudit moteur.

Avantageusement, l'échangeur 84 thermique du système 82 de refroidissement est agencé au plus près du réservoir 14 de carburant afin que le carburant utilisé pour le refroidissement du liquide de refroidissement dans le système 82 présente une température qui soit aussi basse que possible.

A titre d'exemples non limitatifs, la température maximale atteinte par le carburant dans le réservoir est par exemple d'environ 60°C tandis que par comparaison le carburant est susceptible d'atteindre des températures de l'ordre de 70 à 80 °C à proximité de la pompe 26 haute pression.

Le refroidissement obtenu sera d'autant plus important que l'écart entre la température du carburant et la température du liquide de refroidissement sera grand.

La température du liquide de refroidissement en fonctionnement est d'environ 90°C, pouvant atteindre 110°C.

Avantageusement, le système 82 de refroidissement selon le mode de réalisation nécessite peu de modifications d'un moteur 10 existant et requiert principalement l'ajout d'un échangeur 84 thermique, de moyens de régulation constitués des vannes 92 et 94 pour chacune des boucles 86 et 88, et d'une pompe 90.

Le système 82 de refroidissement est avantageusement contrôlé par une unité de contrôle (non représentée).

De préférence, l'unité de contrôle du système 82 de refroidissement est constituée par l'unité de contrôle du moteur 10 qui est généralement désignée par l'acronyme « ECU » pour « *Electronic Control Unit* » en anglais.

L'invention propose encore un procédé de commande d'un système 82 de refroidissement équipant un moteur 10 à combustion interne pour refroidir sélectivement du liquide de refroidissement au moyen de carburant en réalisant un transfert thermique entre ledit liquide de refroidissement et du carburant au travers au moins un échangeur 84 thermique.

Le procédé de commande du système 82 de refroidissement comporte au moins une étape de commande consistant à commander sélectivement en ouverture des moyens de régulation, telles que les vannes 92 et 94, dudit système 82 de refroidissement pour réaliser ledit transfert thermique entre le liquide de refroidissement et le carburant au travers dudit au moins un échangeur 84 thermique.

De préférence, le procédé de commande du système 82 de refroidissement comporte au moins une étape de contrôle consistant à contrôler les conditions déterminées suivantes :
- une stratégie de réduction de la trainée aérodynamique du moteur est activée ou à l'état actif ; et
- la température du liquide de refroidissement est supérieure à une température T₁ de référence commandant l'utilisation du système 82 de refroidissement et inférieure à une température T₀ de seuil provoquant la désactivation de ladite stratégie de réduction de la traînée aérodynamique du moteur ; et
- la température du carburant est inférieure à la température du liquide de refroidissement.

De préférence, le système 82 de refroidissement est utilisé pour refroidir le liquide de refroidissement tant que les trois conditions déterminées précitées sont remplies et cesse de fonctionner, c'est à dire de refroidir le liquide de refroidissement, dès lors qu'au moins l'une desdites conditions n'est plus remplies.

On décrira plus particulièrement ci-après le fonctionnement du système 82 de refroidissement selon le mode de réalisation décrit en référence à la figure 1.

Avantageusement, la description de la figure 3 l'illustrant sera faite par comparaison avec celle de la figure 2 qui va être décrite et qui illustre le fonctionnement d'un moteur 10 selon l'état de la technique.

On a représenté, sur la figure 2, l'évolution de la température du liquide de refroidissement en fonction du temps dans le cas d'un moteur 10 selon l'état de la technique, c'est-à-dire en l'absence de système 82 de refroidissement selon l'invention.

La stratégie de réduction de la traînée aérodynamique est par défaut à l'état actif ou activée, c'est-à-dire selon l'exemple de moyens d'obturation indiqué en préambule que le ou les volets occupent par défaut une position fermée.

La température T₀ correspond à une valeur de température du liquide de refroidissement, dite température de seuil, pour laquelle la stratégie de réduction de la traînée aérodynamique est désactivée, passant de l'état actif à l'état inactif.

Lorsque le moteur est en mode de fonctionnement, dit normal, l'activation ou la désactivation de la stratégie de réduction de la traînée aérodynamique du moteur est déterminée en fonction de la valeur de la température du liquide de refroidissement.

Lorsque le moteur cesse d'être en mode de fonctionnement normal pour passer dans un autre mode de fonctionnement, dit traitement, la stratégie de réduction de la traînée aérodynamique du moteur est désactivée automatiquement, indépendamment de la valeur de la température du liquide de refroidissement par rapport à ladite température T₀ de seuil.

Le mode de fonctionnement, dit de traitement, correspond par exemple à la mise en œuvre d'une purge ou d'une régénération d'au moins un dispositif de dépollution, tel qu'un piège à NOx ou un FAP.

Sur la courbe de température représentée à la figure 2, la valeur de la température du liquide de refroidissement est initialement inférieure à ladite température T₀ de seuil de sorte que la stratégie de réduction de la traînée aérodynamique du moteur est par défaut à l'état actif.

Le repère A correspond au début de mise en œuvre d'un traitement tel qu'une purge ou une régénération, le moteur passant du mode de fonctionnement normal au mode de fonctionnement de traitement.

A partir du repère A, la stratégie de réduction de la traînée aérodynamique du moteur (par défaut à l'état actif) va être automatiquement désactivée, par exemple par l'unité de contrôle du moteur.

Le repère B correspond quant à lui à la fin du traitement de sorte que ladite purge ou régénération du dispositif de dépollution est réalisée entre les repères A et B.

A partir du repère B, une fois le traitement achevée, la stratégie de réduction de la traînée aérodynamique du moteur va être automatiquement réactivée, passant de l'état inactif à l'état actif.

Dans l'exemple représenté sur la figure 2, la température du liquide de refroidissement augmente au cours de la phase de traitement entre A et B mais sa valeur reste cependant inférieure à ladite température T₀ de seuil.

La phase de traitement qui vient d'être décrite est avantageusement suivie d'une phase d'observation qui débute à partir du repère B pour s'achever au repère C.

Durant la phase d'observation entre les repères B et C, la température du liquide de refroidissement peut évoluer de deux manières différentes, la première représentée par la courbe en pointillé correspond à une augmentation et la seconde représentée par la courbe en trait plein correspond à une diminution de la température du liquide de refroidissement.

Une fois la phase de traitement achevée, la commande de l'activation ou de la désactivation de la stratégie de réduction de la traînée aérodynamique du moteur est à nouveau déterminée en fonction de la valeur de la température du liquide de refroidissement par rapport à la température T₀ de seuil.

Au cours de la phase d'observation, lorsque la valeur de la température du liquide de refroidissement évolue à la hausse au-delà du repère B correspondant à la fin du traitement selon la courbe représentée en pointillé, la stratégie de réduction de la traînée aérodynamique du moteur va être de nouveau désactivée dès que cette valeur va devenir supérieure à celle de la température T₀ de seuil.

La désactivation de la stratégie de réduction de la traînée aérodynamique du moteur permet alors de réduire la température du liquide de refroidissement pour en diminuer la valeur jusqu'à ce que ladite valeur soit avantageusement de nouveau inférieure à la température T₀ de seuil.

En effet, la désactivation s'illustre par exemple par l'ouverture de moyens d'obturation qui permettent depuis l'extérieur du véhicule l'introduction d'air frais dans le compartiment moteur, lequel air participe alors au refroidissement général du moteur.

Tel qu'expliqué en préambule, le refroidissement ainsi obtenu s'effectue cependant au détriment de la trainée aérodynamique induite par le moteur et entraîne par conséquent une augmentation de la consommation de carburant, soit corollairement une augmentation des émissions de polluants.

Au cours de la phase d'observation, lorsque la valeur de la température du liquide de refroidissement évolue à la baisse au-delà du repère B correspondant à la fin du traitement selon la courbe représentée en trait plein, la stratégie de réduction de la traînée aérodynamique du moteur qui a été réactivée le demeure dès lors que la valeur de la température du liquide de refroidissement reste inférieure à celle de la température T₀ de seuil.

On décrira maintenant, par comparaison avec la figure 2, le fonctionnement d'un moteur 10 équipé d'un système 82 de refroidissement dont la figure 3 représente l'évolution de la température du liquide de refroidissement en fonction du temps.

Comme sur la figure 2 précédente, les repères A et B correspondent à un intervalle de temps au cours duquel une phase de traitement est mise en œuvre.

Par comparaison avec le fonctionnement de l'état de la technique décrit pour la figure 2, la stratégie de réduction de la traînée aérodynamique du moteur n'est pas automatiquement désactivée lorsque débute en A ladite phase de traitement.

La stratégie de réduction de la traînée aérodynamique du moteur étant maintenue, ce qui s'illustre par exemple par le maintien en position fermée de moyens d'obturation précités tels qu'un ou des volets, la température du liquide de refroidissement va alors augmentée.

Le système 82 de refroidissement est alors susceptible d'être utilisé pour limiter l'augmentation de la température du liquide de refroidissement résultant de ce maintien de la stratégie de réduction de la traînée aérodynamique du moteur lors de la phase de traitement.

De préférence, lorsque la température du liquide de refroidissement atteint une valeur correspondant à une température T1 de référence, on commande alors l'ouverture des moyens de régulation associés au système 82 de refroidissement.

Le point A1 sur la courbe de température correspond ainsi à l'ouverture des vannes 92 et 94 qui est commandée lorsque la température du liquide de refroidissement est supérieure ou égale à ladite température T₁ de référence.

La valeur de la température du liquide de refroidissement par rapport celle de la température T₁ de référence ne constitue cependant dans le présent exemple que l'une des conditions à remplir.

Avantageusement, la commande en ouverture des vannes 92 et 94 formant les moyens de régulation pilotée par l'unité de contrôle du moteur 10 est précédée de l'étape de contrôle afin de vérifier que les conditions de mise en œuvre du système 82 de refroidissement sont bien toutes remplies.

Grâce aux moyens de mesure, tels que les capteurs 30 et 80, l'unité contrôle vérifie notamment que la température du carburant est inférieure à la température du liquide de refroidissement.

L'ouverture de la vanne 92 permet d'établir depuis le réservoir 14 une circulation de carburant dans la première boucle 86 tandis que l'ouverture de la vanne 94 permet d'établir depuis le circuit 50 de refroidissement du moteur 10 une circulation de liquide de refroidissement dans la deuxième boucle 88 du système 82 de refroidissement.

Le refroidissement supplémentaire obtenu grâce au système 82 de refroidissement du liquide de refroidissement par le carburant permet de retarder la désactivation de la stratégie de réduction de la traînée aérodynamique du moteur.

Par comparaison avec l'état de la technique, la durée pendant laquelle la stratégie de réduction de la traînée aérodynamique du moteur est ainsi maintenue correspond à une durée pendant laquelle ni la consommation en carburant ni les émissions de polluants ne vont augmenter du fait du maintien de la stratégie de réduction de la traînée aérodynamique.

Tel que décrit précédemment pour la figure 2, le repère B correspond à la fin de la phase de traitement et est avantageusement suivi d'une phase d'observation qui s'étend temporellement jusqu'au repère C.

La courbe de la température du liquide de refroidissement peut alors évoluer de deux manières comme décrit précédemment pour la figure 2, à savoir à la hausse suivant la courbe en pointillé ou à la baisse suivant la courbe en trait plein.

Au cours de la phase d'observation s'étendant dans un intervalle de temps compris entre B et C, si la valeur de la température du liquide de refroidissement augmente suivant la courbe en pointillé et vient à être supérieure à la valeur de la température T₀ de seuil, la stratégie de réduction de la traînée aérodynamique est alors désactivée.

Toutefois, le système 82 de refroidissement est avantageusement toujours en fonctionnement de sorte qu'au moins une partie du liquide de refroidissement est refroidie par du carburant à travers l'échangeur 84 du système.

Le transfert thermique dans l'échangeur 84 s'opère du liquide de refroidissement vers le carburant pour le refroidissement du premier par le second, c'est la raison pour laquelle l'une des conditions requises à la mise en œuvre du système 82 de refroidissement est que la température du carburant soit inférieure à celle du liquide de refroidissement.

Grâce à ce refroidissement supplémentaire du liquide de refroidissement, une diminution plus rapide de la température du liquide de refroidissement est obtenue au bénéfice là encore d'un gain de consommation de carburant et d'une réduction correspondante d'émission de polluants.

En effet, la température du liquide de refroidissement en diminuant plus rapidement est susceptible de repasser sous la valeur de la température T₀ de seuil de sorte que la stratégie de réduction de la traînée aérodynamique du moteur est alors de nouveau activée, c'est-à-dire réactivée plus rapidement.

Par comparaison avec la courbe en pointillé de la figure 2, on notera que celle de la figure 3 présente une pente plus importante qui illustre le fait que le refroidissement du liquide de refroidissement est obtenu plus rapidement.

Lorsque la valeur de la température du liquide de refroidissement atteint celle de la température T₁ de référence, c'est-à-dire le point B1 sur la figure 3, l'une des conditions n'est alors plus remplies et le procédé de commande interrompt l'utilisation du système 82 de refroidissement.

Avantageusement, l'unité de contrôle du moteur met en œuvre l'étape de commande consistant à commander sélectivement les moyens de régulation du système 82 de refroidissement que constituent lesdites vannes 92 et 94, lesdites vannes 92 et 94 étant alors commandées en fermeture.

Les phases de traitement et d'observation qui se succèdent appartiennent au mode de fonctionnement de traitement, une fois achevée au repère C la phase d'observation, le moteur 10 est à nouveau en mode de fonctionnement normal.

L'activation ou la désactivation de la stratégie de réduction de la traînée aérodynamique du moteur est alors commandée en fonction de la valeur de la température du liquide de refroidissement par rapport à ladite température T₀ de seuil.

## Revendications

1. Véhicule comportant un compartiment moteur délimitant une entrée d'air destiné au refroidissement d'un moteur (10) à combustion interne, notamment du type Diesel à injection directe, comportant au moins :
- un circuit (12) d'alimentation pour alimenter le moteur (10) en carburant, ledit circuit (12) d'alimentation comportant au moins un réservoir (14) de carburant auquel est associée une pompe (16) de gavage, des moyens (18) de filtration du carburant, une pompe (26) haute pression et un capteur (30) de mesure de la température du carburant ;
- un circuit (50) de refroidissement du moteur (10) par circulation d'au moins un liquide de refroidissement, ledit circuit (50) de refroidissement comportant au moins une pompe (58) et un capteur (80) de mesure de la température du liquide de refroidissement,
le véhicule comportant des moyens d'obturation de l'entrée d'air améliorant le rendement énergétique du véhicule, lesdits moyens d'obturation étant contrôlés selon une stratégie de réduction de la traînée aérodynamique du moteur,
**caractérisé en ce que** le moteur (10) comporte un système (82) de refroidissement pour refroidir sélectivement à travers au moins un échangeur (84) thermique du liquide de refroidissement au moyen du carburant, et
**en ce que** le système (82) de refroidissement du moteur est utilisé pour refroidir sélectivement à travers au moins un échangeur (84) thermique le liquide de refroidissement au moyen du carburant et retarder la désactivation de la stratégie de réduction de la traînée aérodynamique du moteur en redirigeant le flux d'air, notamment en le déviant autour de l'avant du véhicule pour le faire s'écouler sur les côtés de celui-ci plutôt que par le compartiment moteur où il rencontre une forte résistance aérodynamique.

2. Véhicule selon la revendication 1, **caractérisé en ce que** ledit système (82) de refroidissement pour refroidir du liquide de refroidissement au moyen du carburant comporte au moins une première boucle (86) de circulation du carburant qui est reliée au circuit (12) d'alimentation en carburant du moteur et une deuxième boucle (88) de circulation du liquide de refroidissement qui est reliée au circuit (50) de refroidissement du moteur, lesdites première boucle (86) et deuxième boucle (88) étant sélectivement mises en relation de transfert thermique au travers dudit au moins un échangeur (84) thermique du système par des moyens (92, 94) de régulation.

3. Véhicule selon la revendication 2, **caractérisé en ce que** lesdits moyens de régulation du système (82) de refroidissement comportent au moins des premiers moyens (92) de régulation pour contrôler la circulation du carburant dans ladite première boucle (86) et des deuxièmes moyens (94) de régulation pour contrôler la circulation du liquide de refroidissement dans ladite deuxième boucle (88) du système.

4. Véhicule selon la revendication 3, **caractérisé en ce que** les premiers moyens (92) de régulation comportent au moins une vanne qui est agencée en aval du réservoir (14) de carburant.

5. Véhicule selon la revendication 3 ou 4, **caractérisé en ce que** ladite au moins une vanne formant les premiers moyens (92) de régulation est agencée en aval de la pompe (16) de gavage et en amont de moyens (18) de filtration du carburant que comporte ledit circuit (12) d'alimentation en carburant du moteur (10).

6. Véhicule selon l'une des revendications 3 à 5, **caractérisé en ce que** les deuxièmes moyens (94) de régulation comportent au moins une vanne qui est agencée en amont de l'échangeur (84) thermique du système (82).

7. Véhicule selon l'une quelconque des revendications 2 à 6, **caractérisé en ce que** le système (82) de refroidissement comporte au moins une pompe (90) agencée dans la deuxième boucle (88) de circulation du liquide de refroidissement.

8. Véhicule selon l'une quelconque des revendications précédentes, **caractérisé en ce que** le système (82) de refroidissement comporte au moins des moyens de mesure de la température du carburant et des moyens de mesure de la température du liquide de refroidissement.

9. Véhicule selon la revendication 8, **caractérisé en ce que** lesdits moyens de mesure de température du carburant sont constitués par le capteur (30) de température qui est agencé en amont de la pompe (26) haute pression du circuit (12) d'alimentation en carburant du moteur et **en ce que** lesdits moyens de mesure de température du liquide de refroidissement sont constitués par le capteur (80) de température qui est agencé en aval du moteur (10) pour mesurer la température du liquide de refroidissement en sortie dudit moteur.

10. Véhicule selon l'une quelconque des revendications précédentes, **caractérisé en ce que** l'échangeur (84) thermique du système (82) de refroidissement est agencé au plus près du réservoir (14) de carburant.

## Patentansprüche

1. Fahrzeug umfassend einen Motorraum, der einen Lufteinlass begrenzt, der zur Kühlung eines Verbrennungsmotors (10), insbesondere vom Typ Diesel mit Direkteinspritzung, bestimmt ist, umfassend mindestens:
- einen Versorgungskreislauf (12) zur Versorgung des Motors (10) mit Brennstoff, der Versorgungskreislauf (12) umfassend mindestens einen Brennstofftank (14), dem eine Speisepumpe (16) zugeordnet ist, Mittel (18) zur Filterung des Brennstoffs, eine Hochdruckpumpe (26) und einen Sensor (30) zur Messung der Brennstofftemperatur;
- einen Kreislauf (50) zur Kühlung des Motors (10) durch Zirkulation mindestens einer Kühlflüssigkeit, der Kühlkreislauf (50) umfassend mindestens eine Pumpe (58) und einen Sensor (80) zur Messung der Temperatur der Kühlflüssigkeit,
das Fahrzeug umfassend Mittel zum Verschluss des Lufteinlasses, die die Energieeffizienz des Fahrzeugs verbessern, wobei die Verschlussmittel nach einer Strategie der Verringerung des aerodynamischen Widerstand des Motors gesteuert werden,
**dadurch gekennzeichnet, dass** der Motor (10) ein Kühlsystem (82) umfasst, um durch mindestens einen Wärmetauscher (84) Kühlflüssigkeit mittels des Brennstoffs zu kühlen, und
dadurch, dass das Kühlsystem (82) des Motors dafür genutzt wird, die Kühlflüssigkeit durch mindestens einen Wärmetauscher (84) mittels des Brennstoffs selektiv zu kühlen und die Deaktivierung der Strategie der Verringerung des aerodynamischen Widerstands des Motors zu verzögern, indem der Luftstrom umgeleitet wird, insbesondere indem er um den Vorderteil des Fahrzeugs herum umgeleitet wird, damit er an den Seiten desselben strömt, anstatt durch den Motorraum, wo er auf einen starken aerodynamischen Widerstand trifft.

2. Fahrzeug nach Anspruch 1, **dadurch gekennzeichnet, dass** das Kühlsystem (82) zur Kühlung von Kühlflüssigkeit mittels des Brennstoffs mindestens eine erste Schleife (86) zur Zirkulation des Brennstoffs, die mit dem Kreislauf (12) zur Brennstoffversorgung des Motors verbunden ist, und eine zweite Schleife (88) zur Zirkulation der Kühlflüssigkeit, die mit dem Kühlkreislauf (50) des Motors verbunden ist, umfasst, wobei die erste Schleife (86) und die zweite Schleife (88) durch den mindestens einen ersten Wärmetauscher (84) des Systems durch Regelmittel (92, 94) selektiv miteinander in Wärmeübertragungsbeziehung gebracht werden.

3. Fahrzeug nach Anspruch 2, **dadurch gekennzeichnet, dass** die Regelmittel des Kühlsystems (82) wenigstens erste Regelmittel (92) zur Steuerung der Zirkulation des Brennstoffs in der ersten Schleife (86) und zweite Regelmittel (94) zur Steuerung der Zirkulation der Kühlflüssigkeit in der zweiten Schleife (88) des Systems umfassen.

4. Fahrzeug nach Anspruch 3, **dadurch gekennzeichnet, dass** die ersten Regelmittel (92) mindestens ein Ventil umfassen, das stromab des Brennstofftanks (14) angeordnet ist.

5. Fahrzeug nach Anspruch 3 oder 4, **dadurch gekennzeichnet, dass** das mindestens eine Ventil, das die ersten Regelmittel (92) bildet, stromab der Speisepumpe (16) und stromauf von Mitteln (18) zur Filterung des Brennstoffs, die der Kreislauf (12) zur Brennstoffversorgung des Motors (10) umfasst, angeordnet ist.

6. Fahrzeug nach einem der Ansprüche 3 bis 5, **dadurch gekennzeichnet, dass** die zweiten Regelmittel (94) mindestens ein Ventil umfassen, das stromauf des Wärmetauschers (84) des Systems (82) angeordnet ist.

7. Fahrzeug nach einem der Ansprüche 2 bis 6, **dadurch gekennzeichnet, dass** das Kühlsystem (82) mindestens eine Pumpe (90) umfasst, die in der zweiten Schleife (88) zur Zirkulation der Kühlflüssigkeit angeordnet ist.

8. Fahrzeug nach einem der vorhergehenden Ansprüche, **dadurch gekennzeichnet, dass** das Kühlsystem (82) wenigstens Mittel zur Messung der Temperatur des Brennstoffs und Mittel zur Messung der Temperatur der Kühlflüssigkeit umfasst.

9. Fahrzeug nach Anspruch 8, **dadurch gekennzeichnet, dass** die Mittel zur Messung der Temperatur des Brennstoffs vom Temperatursensor (30) gebildet sind, der stromauf der Hochdruckpumpe (26) des Kreislaufs (12) zur Brennstoffversorgung des Motors angeordnet ist, und dadurch, dass die Mittel zur Messung der Temperatur der Kühlflüssigkeit vom Temperatursensor (80) gebildet sind, der stromab des Motors (10) angeordnet ist, um die Temperatur der Kühlflüssigkeit am Ausgang des Motors zu messen.

10. Fahrzeug nach einem der vorhergehenden Ansprüche, **dadurch gekennzeichnet, dass** der Wärmetauscher (84) des Kühlsystems (82) möglichst nahe am Brennstofftank (14) angeordnet ist.

## Claims

1. Vehicle having an engine compartment that delimits an air inlet for air intended for cooling an internal combustion engine (10), in particular of the direct-injection diesel engine type, that has at least:
- one supply circuit (12) for supplying the engine (10) with fuel, said supply circuit (12) having at least one fuel tank (14) with which a booster pump (16) is associated, means (18) for filtering the fuel, a high-pressure pump (26) and a sensor (30) for measuring the temperature of the fuel;
- one cooling circuit (50) for cooling the engine (10) by the circulation of at least one cooling liquid, said cooling circuit (50) having at least a pump (58) and a sensor (80) for measuring the temperature of the cooling liquid,
the vehicle having shut-off means for shutting off the air inlet, improving the energy efficiency of the vehicle, said shut-off means being controlled according to a strategy for reducing the aerodynamic drag of the engine,
**characterized in that** the engine (10) has a cooling system (82) for selectively cooling the cooling liquid through at least one heat exchanger (84) by means of the fuel, and
**in that** the engine cooling system (82) is used to selectively cool the cooling liquid through at least one heat exchanger (84) by means of the fuel and delay the deactivation of the strategy for reducing the aerodynamic drag of the engine by redirecting the stream of air, in particular by diverting it around the front of the vehicle so that it flows over the sides thereof rather than through the engine compartment where it encounters strong aerodynamic resistance.

2. Vehicle according to Claim 1, **characterized in that** said cooling system (82) for cooling the cooling liquid by means of the fuel has at least a first loop (86) for circulation of the fuel, which is connected to the supply circuit (12) for supplying the engine with fuel, and a second loop (88) for circulation of the cooling liquid, which is connected to the engine cooling circuit (50), said first loop (86) and said second loop (88) being selectively put into a heat-transfer relationship through said at least one heat exchanger (84) of the system by regulation means (92, 94).

3. Vehicle according to Claim 2, **characterized in that** said regulation means for regulating the cooling system (82) have at least first regulation means (92) for controlling the circulation of the fuel in said first loop (86) and second regulation means (94) for controlling the circulation of the cooling liquid in said second loop (88) of the system.

4. Vehicle according to Claim 3, **characterized in that** the first regulation means (92) have at least one valve that is arranged downstream of the fuel tank (14).

5. Vehicle according to Claim 3 or 4, **characterized in that** said at least one valve that forms the first regulation means (92) is arranged downstream of the booster pump (16) and upstream of means (18) for filtering the fuel, which said supply circuit (12) for supplying the engine (10) with fuel has.

6. Vehicle according to one of Claims 3 to 5, **characterized in that** the second regulation means (94) have at least one valve that is arranged upstream of the heat exchanger (84) of the system (82).

7. Vehicle according to any one of Claims 2 to 6, **characterized in that** the cooling system (82) has at least one pump (90) arranged in the second loop (88) for circulation of the cooling liquid.

8. Vehicle according to any one of the preceding claims, **characterized in that** the cooling system (82) has at least means for measuring the temperature of the fuel and means for measuring the temperature of the cooling liquid.

9. Vehicle according to Claim 8, **characterized in that** said means for measuring the temperature of the fuel consist of the temperature sensor (30) that is arranged upstream of the high-pressure pump (26) of the supply circuit (12) for supplying the engine with fuel and **in that** said means for measuring the temperature of the cooling liquid consist of the temperature sensor (80) that is arranged downstream of the engine (10) so as to measure the temperature of the cooling liquid at the outlet of said engine.

10. Vehicle according to any one of the preceding claims, **characterized in that** the heat exchanger (84) of the cooling system (82) is arranged as close as possible to the fuel tank (14).
